# EUROPEAN PATENT SPECIFICATION

(11) **EP 1 458 188 B1**
(45) Date of publication and mention of the grant of the patent: **01.10.2008**
(21) Application number: 04076523.2
(22) Date of filing: 13.11.1996
(51) Int. Cl.: H04N 7/00, H04N 11/00, H04N 5/445, H04N 7/08, H04N 7/084, H04N 7/087

(54) **Method and apparatus for displaying textual or graphic data on the screen of television receivers**
Verfahren und Vorrichtung zur Anzeige von Text- oder Grafikdaten auf einem Fernsehbildschirm
Procédé et dispositif d'affichage de données textuelles ou graphiques sur l'écran de récepteurs de télévision

(30) Priority: 13.11.1995 US 6629 P
(43) Date of publication of application: 15.09.2004
(62) Divisional of application: 96940784.0
(73) Proprietor: Gemstar Development Corporation, Pasadena, CA 91101 (US)
(72) Inventor: Kwoh, Daniel S., CA 91013 (US)
(74) Representative: Hale, Peter

(56) References cited:
- EP-A- 0 047 414
- EP-A- 0 128 093
- WO-A-94/29840
- GB-A- 2 257 000
- US-A- 5 434 776

## Description

This invention relates to displaying textual or graphic data on a television screen, and more particularly to a method and apparatus for displaying video cassette recorder (VCR) and/or television programming or prompting commands in various languages.

VCRs generally come equipped with programming commands pre-stored in the VCR's permanent memory in a local language format, which are later displayed on a TV screen during programming operation. For instance, English would be the local language pre-stored in the VCR's permanent memory for VCRs sold in the United States. However, if the television viewer programming the VCR does not read English, it can make the difficult task of programming a VCR even that much more difficult.

To facilitate the process for the viewer, the VCR commands will now be displayed in a variety of foreign languages. These foreign language commands, while not pre-stored in the VCR's permanent memory, will be brought to the viewer across the television signal coming into the viewer's home. This invention eliminates the need to take a VCR back to the manufacturer to have the VCR's permanent memory replaced each time a different language command set is desired. Television signals are composed of a program signal, the portion of the signal that transmits the TV picture, and a vertical blanking interval (VBI), the portion of the signal that stores various data types or messages. The VBI will be used to bring the foreign language VCR commands into the VCR and then stored in the VCR's temporary memory. The viewer can then select the foreign language of choice from options displayed on the screen and thus, program the VCR in his or her native language.

WO-A-9429840 discloses a display system wherein the display attributes of stored display data can be changed. GB-A-2257000 discloses a television display system in which character information in different languages is stored.

The present invention is defined by claims 1 and 8.

The features of a specific embodiment of the best mode contemplated of carrying out the invention are illustrated in the drawings in which
FIG. 1 is a schematic block diagram of a microprocessor controlled television receiver and/or VCR programmed to practice the invention;
FIG. 2 is a diagram representing data transmitting in the VBI;
FIG. 3 is a diagram representing equivalent data that illustrate the operation of the invention; and
FIG. 4 is a television screen display of a menu for a viewer selection of the language for the commands.

The invention contemplates the transmission of foreign language translation of a command set, called equivalent data, to be displayed on the screen of television receivers instead of a local language version of the command set. The command set can represent on-screen prompts to guide the viewer in programming a VCR or performing other VCR and/or television related tasks such as initial setup or sound or picture adjustment. The transmitted equivalent data includes a plurality of foreign language translations of, or graphical data representations of, the local language and a plurality of language identifiers, each being unique to one of the foreign language translations or graphical data representations. The invention is described below in conjunction with a cable television service, but it can also be used in a satellite or broadcast television service.

A host program source and a source of equivalent data at the headend of a television transmission system are coupled to a vertical blanking interval (VBI) encoder to insert the equivalent data into the VBI of the television signal. Alternatively, the equivalent data could be transmitted on a subcarrier of the television signal, a telephone connection, or by other known means for carrying data. Preferably, the equivalent data is repeated continuously all the time that the source is sending out a television signal.

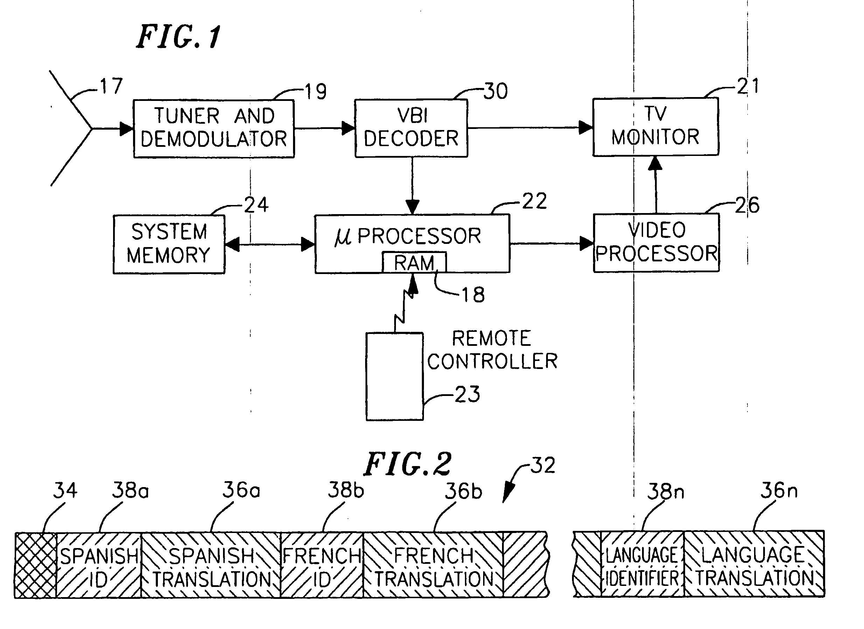

In FIG. 1, the television signal is brought into the viewer's home at a cable subscriber drop 17. The television signal, which contains the transmitted equivalent data, is coupled by a tuner and demodulator 19 to a VBI decoder 30. Decoder 30 strips from the television signal the equivalent data transmitted in the VBI, which is then fed to a microprocessor 22. Microprocessor 22 includes temporary storage in the form of a RAM 18. The equivalent data is stored in RAM 18. The program signal portion of the television signal is fed to a television screen 21.

A remote controller 23 is coupled to microprocessor 22, typically by an infrared transmission link. Microprocessor 22 accesses a system memory 24 in which the local language version of the command set is stored. System memory 24 is typically a ROM or other nonalterable data storage device. Typically, the local language version of the command set is loaded into system memory 24 in the factory during the manufacturing process. Microprocessor 22 decides what data is to be displayed, either the local language stored in system memory 24 or the equivalent data stored in RAM 18. The data to be displayed is composed by microprocessor 22 in a video processor 26, in well known fashion, and then sent to television screen 21 for display.

FIG. 2 depicts equivalent data 32 carried in the VBI. A header field 34 designates the beginning of the equivalent data and controls operation of decoder 30 with clock run in and framing code information. Following header field 34 are the foreign language translations or graphical data representatives of the command set represented by encoded textual data 36a, 36b, ..., 36n, each of which is preceded by a unique language identifier field 38a, 38b, ..., 38n, respectively. As described below in more detail, the individual commands preferably each have an address that defines the location on screen where such command is to be displayed. The same address is thus used for a given command in each language. The language identifiers represent foreign language options, for example French, Spanish, Chinese, etc.

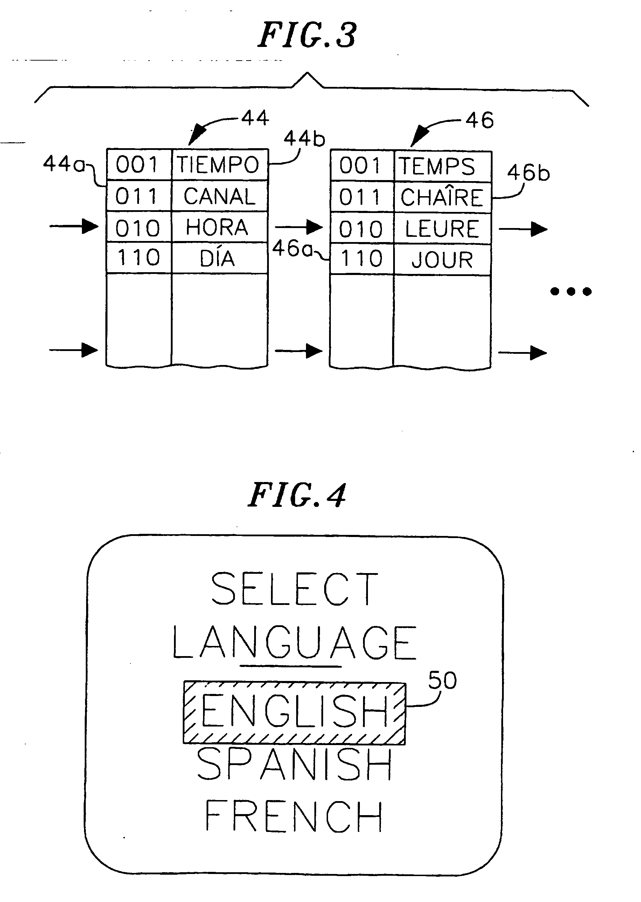

In operation, the viewer presses a set up key on remote controller 23 to initiate a set up mode and then keys in his or her preference of foreign language. Specifically, the viewer selects the foreign language from an on-screen menu shown in FIG. 4. The default selection marked with a cursor 50 is the local language, e.g., English. To select a different language the viewer moves cursor 50 by operating arrow keys on controller 23 and then depresses an enter key on controller 23. The corresponding language identifier is retrieved by microprocessor 22 for comparison with the language identifiers transmitted in the VBI. When a match is detected by microprocessor 22, the corresponding language textual data is "grabbed" from the VBI and downloaded to RAM 18. For example, if the viewer wishes to select the Spanish language equivalent data set, he or she moves cursor 50 and enters that choice into remote controller 23. In such case, microprocessor 22 displays the commands in the selected language. If no equivalent data set is stored in RAM 18, i.e., if the viewer does not select a foreign language, microprocessor 22 displays the local language version of the commands stored in system memory 24.

Although it is preferable to store only a single foreign language command set in RAM 18 to minimize the amount of data storage, all, or at least more than one, of the foreign language command sets could be downloaded to RAM 18 and the selection of the desired foreign language for display could be made by the viewer after the data is downloaded.

In FIG. 3 there is one equivalent data set for each language identifier. For example, if the local language commands include "time, channel, hour, day," the Spanish command set 44 includes "tiempo, canal, hora, dia," and the French command set 46 includes "temps, chaine, heure, jour." The individual commands of each set also have addresses to designate where they are to be placed on the screen to create the desired message. For example, command set 44 has addresses 44a and commands 44b, e.g., "tiempo", and command set 46 has addresses 46a and commands 46b, e.g., "temps". The same address is used for a given command, regardless of the language, e.g., "001" for tiempo and temps, because the address identifies the location of the command displayed on the screen. The same addresses are also used for the local language command set stored in system memory 24, i.e., "001" for temperature. In other words, the address of each local language command in system memory 24 is the same as the address of the corresponding foreign language command in RAM 18.

Alternatively, a different address structure could be used for the local language command set, so each television manufacturer could select its own address structure. In this case, a table is downloaded to RAM 18 in the VBI after the viewer keys in a identification code for h/her particular television model and brand to relate the addresses of the native language to the addresses of the foreign language.

Microprocessor 22 is programmed to operate seamlessly regardless of the language selected by the viewer. A status bit is stored in microprocessor 22. The status bit is one value i.e., binary "1", if a foreign language command set is downloaded to RAM 18, i.e., the downloaded foreign language is to be displayed, and the status bit is the other value, i.e., binary "0", if no foreign language command set has been selected, i.e., the local language is to be displayed. When microprocessor 22 makes a call for a command in the course of its operation, an address is issued to designate the screen location of the command. Microprocessor 22 checks the status bit to determine its value. If the status bit is a binary "1", the address is routed to RAM 18 to retrieve the foreign language command to be displayed at the screen location designated by the address. (If a table is stored in RAM 18, the issued address is converted by reference to the table to an address that designates the screen location at which the foreign language command is to be displayed.) If the status bit is a binary "0", the address is routed to system memory 24 to retrieve the local language command to be displayed at the screen location designated by the address.

Since not all television receivers come with a local language stored in system memory 24, all of the equivalent data sets, including the local language, can be transmitted and stored in microprocessor RAM 18. In this case, there is no default language choice and the viewer must make a choice from the menu of FIG. 4.

The described embodiments of the invention are only considered to be preferred and illustrative of the inventive concept; the scope of the invention is not to be restricted to such embodiments. Various and numerous other arrangements may be devised by one skilled in the art without departing from the spirit and scope of this invention.

In another aspect of the invention, there is provided a system for displaying textual or graphic data on the screen of television receivers, the system comprising: a system memory at each receiver, data representing local language commands being stored in the system memory; a microprocessor; means for configuring the microprocessor to display on the screen local language commands stored in the system memory; a source of equivalent textual or graphic data; means for transmitting the equivalent data to each receiver; and means for configuring the microprocessor to substitute a corresponding part of the equivalent data for the displayed commands.

Preferably, the transmitting means comprises means for inserting the equivalent data into the VBI of a television signal transmitted to each receiver.

Preferably, the microprocessor includes a RAM in which the transmitted equivalent data is stored.

Preferably, the system memory is ROM.

Preferably, the transmitted equivalent data includes unique language identifiers.

Preferably, the configuring means compares the language identifiers with a viewer choice and stores the corresponding equivalent data in the RAM when a match occurs.

Preferably, the storing means comprises means for storing the equivalent data in the microprocessor RAM.

Preferably, the means for configuring the microprocessor to select the data to be displayed comprises: displaying the unique language identifiers of any available equivalent data; displaying the unique language identifier of the local language; inputting a choice; and comparing the inputted choice with the unique language identifiers.

Preferably, the means for configuring the microprocessor to display on the screen the data selected to be displayed comprising a means for the microprocessor to display the selected foreign language translation or graphical representative stored in the RAM or the local language textual data stored in system memory, corresponding to the inputted choice, and in the absence of any selection defaulting to the local language textual data stored in system memory.

Preferably, the system memory is the RAM in the microprocessor.

Preferably, the equivalent data includes a plurality of textual or graphical data sets and a plurality of language identifiers each being unique to one of the textual or graphical data sets.

Preferably, the storing means comprises means for storing the equivalent data in the microprocessor RAM.

Preferably, the means for configuring the microprocessor to select the data to be displayed comprises: displaying the unique language identifiers of any available equivalent data; inputting a choice; and comparing the inputted choice with the unique language identifiers.

Preferably, the means for configuring the microprocessor to display on the screen the data selected to be displayed comprising a means for the microprocessor to display the selected textual or graphical data sets stored in the system memory, corresponding to the inputted choice.

In another aspect of the invention, there is provided a method for displaying textual or graphic data on the screen of television receivers comprising the steps of: displaying local language commands on the screen of a television receiver; transmitting to the television receiver equivalent data, the equivalent data including a plurality of foreign language translations of, or graphical representatives of, the local language commands; choosing one of the transmitted foreign language translations; and substituting the chosen foreign language translation for the displayed local language command.

Preferably, the method further comprises the steps of: attaching to the transmitted equivalent data a plurality of language identifiers, each being unique to the one of the foreign language translations or graphical data representations; inputting a choice; comparing the inputted choice with the unique language identifiers; and storing the equivalent data when a match occurs in the comparing step.

Preferably, the inputting step comprises selecting a choice from an on-screen menu.

## Claims

1. A method for displaying textual or graphic data on a screen (21) of a television receiver comprising the steps of:
displaying local language commands on the screen of the television receiver;
transmitting, via a transmission link, and receiving at the receiver equivalent data (32) which includes a plurality of translations, or graphical representations, in one or more foreign languages, of the local language commands, to which equivalent data is attached a plurality of language identifiers (38a, 38b,..., 38n), each being unique to one of the foreign language translations or graphical data representations;
creating a language menu including a listing of the foreign languages;
displaying the language menu on the screen;
choosing one of the transmitted foreign languages from the language menu by inputting a choice among the language identifiers;
comparing the inputted choice with the language identifiers attached to the equivalent data;
storing the equivalent data when a match occurs in the comparing step; and
substituting the foreign language translation corresponding to the chosen foreign language for the displayed local language command.

2. The method of claim 1, additionally comprising the step of transmitting a television signal from a head end to the television receiver, the step of transmitting equivalent data comprising inserting the equivalent data into the television signal at the head end.

3. The method of claim 2, in which the step of inserting the equivalent data inserts the equivalent data into a VBI of the television signal.

4. The method of claim 1, the step of transmitting equivalent data comprising sending the equivalent data over a telephone line.

5. The method of claim 2, in which, the step of transmitting equivalent data also transmits the local language commands and a local language identifier.

6. The method of claim 1, additionally comprising the steps of:
assigning addresses to the local language commands indicative of the location on the screen where the commands are to be displayed;
assigning addresses to the substituted equivalent data that are related to the addresses of the local language commands;
configuring a microprocessor to display commands depending upon their addresses; and
storing a status bit that indicates whether local language commands or a foreign language translation of the commands are to be displayed.

7. The method of claim 6, additionally comprising the step of configuring the microprocessor when a call is made for a command to issue an address to designate a screen location, retrieve the command responsive to the status bit and the issued address, and display the retrieved command.

8. A system for displaying textual or graphic data on a screen (21) of a television receiver, the system comprising:
means for displaying local language commands on the screen of the television receiver;
means for transmitting, via a transmission link, and receiving at the receiver equivalent data (32) which includes a plurality of translations, or graphical representations, in one or more foreign languages, of the local language commands, to which equivalent data is attached a plurality of language identifiers (38a, 38b,..., 38n), each being unique to one of the foreign language translations or graphical data representations;
means for creating a language menu including a listing of the foreign languages;
means for displaying the language menu on the screen;
means for choosing one of the transmitted foreign languages from the language menu responsive to an input of a choice among the language identifiers;
means for comparing the inputted choice with the language identifiers attached to the equivalent data;
means for storing the equivalent data when a match occurs in the comparing step; and
means for substituting the foreign language translation corresponding to the chosen foreign language for the displayed local language command.

9. The system of claim 8, additionally comprising means for transmitting a television signal from a head end to the television receiver, the means for transmitting equivalent data comprising means for inserting the equivalent data into the television signal at the head end.

10. The system of claim 9, in which the means for inserting the equivalent data comprises means for inserting the equivalent data into a VBI of the television signal.

11. The system of claim 8, in which the means for transmitting equivalent data comprises means for sending the equivalent data over a telephone line.

12. The system of claim 9, in which the means for transmitting equivalent data also comprises means for transmitting the local language commands and a local language identifier.

13. The system of claim 8, additionally comprising:
means for assigning addresses to the local language commands indicative of the location on the screen where the commands are to be displayed;
means for assigning addresses to the substituted equivalent data that are related to the addresses of the local language commands;
means for configuring a microprocessor to display commands depending upon their addresses; and
means for storing a status bit that indicates whether local language commands or a foreign language translation of the commands are to be displayed.

14. The system of claim 13, additionally comprising means for configuring the microprocessor when a call is made for a command to issue an address to designate a screen location, retrieve the command responsive to the status bit and the issued address, and display the retrieved command.

## Patentansprüche

1. Verfahren zur Anzeige von Text- oder Graphikdaten auf einem Bildschirm (21) eines TV-Empfängers, umfassend die Schritte:
Anzeigen von lokalen Sprachbefehlen auf dem Bildschirm des TV-Empfängers;
Übertragen der äquivalenten Daten (32) über eine Übertragungsverbindung und Empfangen dieser beim Empfänger,
wobei die Daten eine Vielzahl von Translationen oder graphischen Darstellungen der lokalen Sprachbefehle in einer oder mehreren Fremdsprache/n enthalten, wobei die äquivalenten Daten eine Vielzahl von Sprachidentifikatoren (38a, 38b, ..., 38n) aufweisen, wobei jeder für eine der Fremdsprachentranslationen oder graphischen Datendarstellungen davon einzigartig ist;
Erstellen eines Sprachmenüs, einschließlich einer Liste der Fremdsprachen;
Anzeigen des Sprachmenüs auf dem Bildschirm;
Auswählen einer der übertragenen Fremdsprachen aus dem Sprachmenü durch Eingeben einer Wahl unter den Sprachidentifikatoren;
Vergleichen der eingegebenen Wahl mit den Sprachidentifikatoren, die die äquivalenten Daten aufweisen;
Speichern der äquivalenten Daten, wenn im vergleichsschritt eine Übereinstimmung auftritt; und
Ersetzen der Fremdsprachentranslation entsprechend der gewählten Fremdsprache für den angezeigten lokalen Sprachbefehl.

2. Verfahren nach Anspruch 1, zusätzlich umfassend den Schritt des Übertragens eines TV-Signals von einem Kopfstück zum TV-Empfänger, wobei der Schritt des Übertragens von äquivalenten Daten das Einbringen der äquivalenten Daten in das TV-Signal am Kopfstück miteinschließt.

3. Verfahren nach Anspruch 2, wobei der Schritt des Einbringens der äquivalenten Daten die äquivalenten Daten in ein vertikales Austastintervall (VBI) des TV-Signals einbringt.

4. Verfahren nach Anspruch 1, wobei der Schritt des Übertragens von äquivalenten Daten das Senden der äquivalenten Daten über eine Telephonleitung umfasst.

5. Verfahren nach Anspruch 2, wobei der Schritt des Übertragens von äquivalenten Daten auch die lokalen Sprachbefehle und einen lokalen Sprachidentifikator überträgt.

6. Verfahren nach Anspruch 1, zusätzlich umfassend die Schritte:
Zuordnen von Adressen zu den lokalen Sprachbefehlen, die für die Position auf dem Bildschirm, an der die Befehle anzuzeigen sind, indikativ sind;
Zuordnen von Adressen zu den ersetzten äquivalenten Daten, die sich auf die Adressen der lokalen Sprachbefehle beziehen;
Konfigurieren eines Mikroprozessors, um Befehle je nach ihrer Adresse anzuzeigen; und
Speichern eines Statusbits, das indiziert, ob lokale Sprachbefehle oder eine Fremdsprachentranslation der Befehle anzuzeigen sind bzw. ist.

7. Verfahren nach Anspruch 6, zusätzlich umfassend den Schritt des Konfigurierens des Mikroprozessors, wenn eine Anfrage für einen Befehl zum Ausgeben einer Adresse erfolgt, um eine Bildschirmposition zu bestimmen, den Befehl, der auf das Statusbit und die ausgegebene Adresse reagiert, abzurufen und den abgerufenen Befehl anzuzeigen.

8. System zur Anzeige von Text- oder Graphikdaten auf einem Bildschirm (21) eines TV-Empfängers, wobei das System umfasst:
Mittel zum Anzeigen von lokalen Sprachbefehlen auf dem Bildschirm des TV-Empfängers;
Mittel zum Übertragen der äquivalenten Daten (32) über eine Übertragungsverbindung und Empfangen dieser beim Empfänger, wobei die Daten eine Vielzahl von Translationen oder graphischen Darstellungen der lokalen Sprachbefehle in einer oder mehreren Fremdsprache/n enthalten, wobei die äquivalenten Daten eine Vielzahl von Sprachidentifikatoren (38a, 38b, ..., 38n) aufweisen, wobei jeder für eine der Fremdsprachentranslationen oder graphischen Datendarstellungen davon einzigartig ist;
Mittel zum Erstellen eines Sprachmenüs, einschließlich einer Liste der Fremdsprachen;
Mittel zum Anzeigen des Sprachmenüs auf dem Bildschirm;
Mittel zum Auswählen einer der übertragenen Fremdsprachen aus dem Sprachmenü, die auf eine Eingabe einer Wahl unter den Sprachidentifikatoren reagieren;
Mittel zum Vergleichen der eingegebenen Wahl mit den Sprachidentifikatoren, die die äquivalenten Daten aufweisen;
Mittel zum Speichern der äquivalenten Daten, wenn im Vergleichsschritt eine Übereinstimmung auftritt; und
Mittel zum Ersetzen der Fremdsprachentranslation entsprechend der gewählten Fremdsprache für den angezeigten lokalen Sprachbefehl.

9. System nach Anspruch 8, zusätzlich umfassend Mittel zum Übertragen eines TV-Signals von einem Kopfstück zum TV-Empfänger, wobei das Mittel zum Übertragen von äquivalenten Daten Mittel zum Einbringen der äquivalenten Daten in das TV-Signal am Kopfstück miteinschließt.

10. System nach Anspruch 9, wobei das Mittel zum Einbringen der äquivalenten Daten Mittel zum Einbringen der äquivalenten Daten in ein vertikales Austastintervall (VBI) des TV-Signals umfasst.

11. System nach Anspruch 8, wobei das Mittel zum Übertragen von äquivalenten Daten Mittel zum Senden der äquivalenten Daten über eine Telephonleitung umfasst.

12. System nach Anspruch 9, wobei das Mittel zum Übertragen von äquivalenten Daten auch Mittel zum Übertragen der lokalen Sprachbefehle und eines lokalen Sprachidentifikators umfasst.

13. System nach Anspruch 8, zusätzlich umfassend:
Mittel zum Zuordnen von Adressen zu den lokalen Sprachbefehlen, die für die Position auf dem Bildschirm, an der die Befehle anzuzeigen sind, indikativ sind;
Mittel zum Zuordnen von Adressen zu den ersetzten äquivalen Daten, die sich auf die Adressen der lokalen Sprachbefehle beziehen;
Mittel zum Konfigurieren eines Mikroprozessors, um Befehle je nach ihrer Adresse anzuzeigen; und
Mittel zum Speichern eines Statusbits, das indiziert, ob lokale Sprachbefehle oder eine Fremdsprachentranslation der Befehle anzuzeigen sind bzw. ist.

14. System nach Anspruch 13, zusätzlich umfassend Mittel zum Konfigurieren des Mikroprozessors, wenn eine Anfrage für einen Befehl zum Ausgeben einer Adresse erfolgt, um eine Bildschirmposition zu bestimmen, den Befehl, der auf das Statusbit und die ausgegebene Adresse reagiert, abzurufen und den abgerufenen Befehl anzuzeigen.

## Revendications

1. Procédé pour afficher des données textuelles ou graphiques sur un écran (21) d'un récepteur de télévision, comprenant les étapes suivantes :
afficher des commandes en langue locale sur l'écran du récepteur de télévision ;
transmettre, par une liaison de transmission, et recevoir au niveau du récepteur des données équivalentes (32) qui comprennent une pluralité de traductions, ou de représentations graphiques, dans une ou plusieurs langues étrangères, des commandes en langue locale, auxquelles données équivalentes sont attachés une pluralité d'identifiants de langues (38a, 38b, ..., 38n), chacun étant unique à l'une des traductions en langue étrangère ou des représentations de données graphiques ;
créer un menu de langues comprenant une liste des langues étrangères ;
afficher le menu de langues sur l'écran ;
choisir l'une des langues étrangères transmises dans le menu de langues en entrant un choix parmi les identifiants de langues ;
comparer le choix entré aux identifiants de langues attachés aux données équivalentes ;
stocker les données équivalentes lorsqu'une correspondance intervient à l'étape de comparaison ; et
substituer la traduction en langue étrangère correspondant à la langue étrangère choisie à la commande en langue locale affichée.

2. Procédé selon la revendication 1, comprenant en outre l'étape consistant à transmettre un signal de télévision d'une extrémité de tête au récepteur de télévision, l'étape de transmission de données équivalentes comprenant l'insertion des données équivalentes dans le signal de télévision à l'extrémité de tête.

3. Procédé selon la revendication 2, dans lequel l'étape d'insertion des données équivalentes insère les données équivalentes dans une VBI du signal de télévision.

4. Procédé selon la revendication 1, l'étape de transmission de données équivalentes comprenant l'envoi des données équivalentes sur une ligne de téléphone.

5. Procédé selon la revendication 2, dans lequel l'étape de transmission de données équivalentes transmet également les commandes en langue locale et un identifiant de langue locale.

6. Procédé selon la revendication 1, comprenant en outre les étapes suivantes :
attribuer des adresses aux commandes en langue locale indicatives de l'emplacement sur l'écran où les commandes doivent être affichées ;
attribuer des adresses aux données équivalentes substituées qui sont liées aux adresses des commandes en langue locale ;
configurer un microprocesseur pour afficher des commandes en fonction de leurs adresses ; et
stocker un bit de statut qui indique si les commandes en langue locale ou une traduction en langue étrangère des commandes doivent être affichées.

7. Procédé selon la revendication 6, comprenant en outre l'étape consistant à configurer le microprocesseur lorsqu'un appel est effectué pour une commande d'émission d'une adresse pour désigner un emplacement d'écran, extraire la commande en réponse au bit de statut et à l'adresse émise, et afficher la commande extraite.

8. Système pour afficher des données textuelles ou graphiques sur un écran (21) d'un récepteur de télévision, le système comprenant :
des moyens pour afficher des commandes en langue locale sur l'écran du récepteur de télévision ;
des moyens pour transmettre, par une liaison de transmission, et recevoir au niveau du récepteur des données équivalentes (32) qui comprennent une pluralité de traductions, ou de représentations graphiques, dans une ou plusieurs langues étrangères, des commandes en langue locale, auxquelles données équivalentes sont attachés une pluralité d'identifiants de langues (38a, 38b, ..., 38n), chacun étant unique à l'une des traductions en langue étrangère ou des représentations de données graphiques ;
des moyens pour créer un menu de langues comprenant une liste des langues étrangères ;
des moyens pour afficher le menu de langues sur l'écran ;
des moyens pour choisir l'une des langues étrangères transmises dans le menu de langues en réponse à une entrée d'un choix parmi les identifiants de langues ;
des moyens pour comparer le choix entré aux identifiants de langues attachés aux données équivalentes ;
des moyens pour stocker les données équivalentes lorsqu'une correspondance intervient à l'étape de comparaison ; et
des moyens pour substituer la traduction en langue étrangère correspondant à la langue étrangère choisie à la commande en langue locale affichée.

9. Système selon la revendication 8, comprenant en outre des moyens pour transmettre un signal de télévision d'une extrémité de tête au récepteur de télévision, les moyens pour transmettre des données équivalentes comprenant des moyens pour insérer les données équivalentes dans le signal de télévision à l'extrémité de tête.

10. Système selon la revendication 9, dans lequel les moyens pour insérer les données équivalentes comprennent des moyens pour insérer les données équivalentes dans une VBI du signal de télévision.

11. Système selon la revendication 8, dans lequel les moyens pour transmettre des données équivalentes comprennent des moyens pour envoyer les données équivalentes sur une ligne de téléphone.

12. Système selon la revendication 9, dans lequel les moyens pour transmettre des données équivalentes comprennent également des moyens pour transmettre les commandes en langue locale et un identifiant de langue locale.

13. Système selon la revendication 8, comprenant en outre :
des moyens pour attribuer des adresses aux commandes en langue locale indicatives de l'emplacement sur l'écran où les commandes doivent être affichées ;
des moyens pour attribuer des adresses aux données équivalentes substituées qui sont liées aux adresses des commandes en langue locale ;
des moyens pour configurer un microprocesseur pour afficher des commandes en fonction de leurs adresses ; et
des moyens pour stocker un bit de statut qui indique si les commandes en langue locale ou une traduction en langue étrangère des commandes doivent être affichées.

14. Système selon la revendication 13, comprenant en outre des moyens pour configurer le microprocesseur lorsqu'un appel est effectué pour une commande d'émission d'une adresse pour désigner un emplacement d'écran, extraire la commande en réponse au bit de statut et à l'adresse émise, et afficher la commande extraite.
